(19) Europäisches Patentamt
European Patent Office
Office européen des brevets

(11) Veröffentlichungsnummer: **0 322 661 B1**

(12) **EUROPÄISCHE PATENTSCHRIFT**

(45) Veröffentlichungstag der Patentschrift: **08.07.92**

(51) Int. Cl.[5]: **C01G 55/00**

(21) Anmeldenummer: **88120965.4**

(22) Anmeldetag: **15.12.88**

# (54) Verfahren zur Rückgewinnung von Rhodium aus Rhodiumkomplexverbindungen enthaltenden wässrigen Lösungen.

(30) Priorität: **24.12.87 DE 3744213**

(43) Veröffentlichungstag der Anmeldung:
**05.07.89 Patentblatt 89/27**

(45) Bekanntmachung des Hinweises auf die Patenterteilung:
**08.07.92 Patentblatt 92/28**

(84) Benannte Vertragsstaaten:
**AT BE CH DE ES FR GB IT LI NL SE**

(56) Entgegenhaltungen:
**EP-A- 0 255 673**
**DE-A- 3 443 474**
**DE-B- 2 911 193**
**US-A- 4 340 570**
**DE-A- 2 438 847**
**DE-A- 3 626 536**
**GB-A- 1 542 370**
**US-A- 4 341 741**

(73) Patentinhaber: **HOECHST AKTIENGESELLSCHAFT**
**Postfach 80 03 20**
**W-6230 Frankfurt am Main 80(DE)**

(72) Erfinder: **Diekhaus, Gerhard, Dr. Dipl.-Chem.**
**Walsumer Markstrasse 89**
**W-4200 Oberhausen 11(DE)**
Erfinder: **Kappesser, Harald**
**Waidmannsweg 24**
**W-4200 Oberhausen 11(DE)**

**EP 0 322 661 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Rückgewinnung von Rhodium aus Rhodiumkomplexverbindungen, die in Form wäßriger Lösungen als Katalysatoren verwendet wurden.

Rhodiumkomplexverbindungen finden in zunehmendem Maße Verwendung als Katalysatoren oder Bestandteile von Katalysatoren in industriell ausgeübten Prozessen zur Herstellung organischer Chemikalien.

So wird in der DE-Cl-26 27 354 ein Hydroformylierungsverfahren beschrieben, das durch den Einsatz katalytisch wirksamer Rhodiumkomplexverbindungen charakterisiert ist, die als Liganden in Wasser lösliche, sulfonierte Arylphosphine enthalten.

Die Wirtschaftlichkeit derartiger Prozesse hängt in hohem Maße davon ab, daß das Rhodium aus den inaktiv gewordenen Katalysatoren weitgehend verlustfrei wiedergewonnen werden kann. Bei längerem Gebrauch der Katalysatoren nimmt nämlich ihre Aktivität und ihre selektive Wirkung ab. Verursacht wird diese Minderung der Leistungsfähigkeit durch verschiedene Faktoren. Verunreinigungen in den Reaktanten führen im Laufe der Zeit zu irreversibler Vergiftung der Katalysatoren. Auch chemische Umwandlungen der Komplexliganden unter den Bedingungen der Reaktion oder Umsetzungen der Komplexverbindungen mit den Reaktionsprodukten können zu einem partiellen oder vollständigen Verlust der katalytischen Aktivität führen. Daher müssen die Katalysatoren von Zeit zu Zeit regeneriert werden. Im allgemeinen begnügt man sich damit, lediglich das Rhodium wiederzugewinnen und erneut in die als Katalysator verwendete Verbindung zu überführen.

Zur Rückgewinnung von Rhodium aus wäßrigen Lösungen, die Rhodiumkomplexverbindungen enthalten, hat sich ein in der EP-A 0 255 673 (& DE-A 3 626 536), welcher als Stand der Technik im Sinne von Artikel 54 (3) EPÜ gilt, beschriebenes Verfahren sehr bewährt. Es besteht darin, daß man der, eine Rhodiumkomplexverbindung enthaltenden Lösung das wasserlösliche Salz einer Carbonsäure mit 7 bis 22 Kohlenstoffatomen im Überschuß, bezogen auf Rhodium, zusetzt, die Lösung darauf bei 50 bis 200 °C mit einem Oxidationsmittel, insbesondere Sauerstoff oder Luft, behandelt und das als in Wasser unlösliche Verbindung abgeschiedene Rhodium abtrennt. Auf diesem Wege gewinnt man im technischen Betrieb 90 % und mehr des ursprünglich in der Lösung enthaltenden Rhodiums wieder.

Die verbleibenden restlichen Rhodiummengen lassen sich nur mit großem Aufwand, z.B. durch Oxidation bei hoher Temperatur und hohem Druck oder durch thermische Zersetzung, gegebenenfalls in Gegenwart eines Trägermaterials, auf dem sich das Rhodium niederschlagen kann, abtrennen. Allerdings besteht bei der Anwendung von hohen Temperaturen die Gefahr, daß das Rhodium in einer solchen metallischen Form oder in Form von Verbindungen anfällt, die nicht unmittelbar in den aktiven Hydroformylierungskatalysator umgewandelt werden können.

Eine andere Möglichkeit zur Abtrennung des Rhodiums ist der Einsatz hochwertiger Oxidationsmittel, wie Wasserstoffperoxid. Ihrer Anwendung im technischen Maßstab sind jedoch Grenzen gesetzt. Ihr stehen wirtschaftliche Überlegungen ebenso entgegen, wie Schwierigkeiten bei der Handhabung der Oxidationsmittel und mit ihrem Einsatz verbundene Umweltprobleme.

Aufgabe der vorliegenden Erfindung ist es, die aufgezeigten Mängel zu beseitigen und das Rhodium auf einfachem Wege weitgehend aus der wäßrigen Lösung abzutrennen. Dabei soll das Edelmetall in einer Form anfallen, die den problemlosen Wiedereinsatz als Hydroformylierungskatalysator gewährleistet.

Die Erfindung besteht in einem Verfahren zur Rückgewinnung von Rhodium aus Rhodiumkomplexverbindungen enthaltenden wäßrigen Lösungen. Es ist dadurch gekennzeichnet, daß diese Lösungen in einer ersten Stufe bei 80 bis 140 °C mit Sauerstoff oder einem sauerstoffhaltigen Gas in Gegenwart eines wasserlöslichen Salzes einer Carbonsäure mit 7 bis 22 Kohlenstoffatomen und in einer zweiten Stufe bei 50 bis 140 °C mit Hypochlorit behandelt werden.

Überraschenderweise wird durch das neue Verfahren die vorstehend beschriebene Aufgabe gelöst. Die beanspruchte Arbeitsweise stellt nicht nur sicher, daß das Rhodium in hoher Ausbeute zurückgewonnen wird, sondern daß es auch unmittelbar, d.h. z.B. durch einfache Behandlung mit Kohlenmonoxid und Wasserstoff, gegebenenfalls in Gegenwart von Komplexbildnern, in den aktiven Hydroformylierungskatalysator überführt werden kann. Bemerkenswert ist ferner, daß die Behandlungszeiten insgesamt kurz sind, wodurch die Wirtschaftlichkeit des Prozesses verbessert wird. Schließlich treten im Verlauf des Verfahrens keine Stoffe auf, die besondere Maßnahmen zur Vermeidung von Umweltbelastungen erfordern.

Die nach dem neuen Verfahren zu behandelnden wäßrigen Lösungen können zwischen 10 und 2.000 Gew.-ppm Rhodium in Form einer Komplexverbindung enthalten.

Vorzugsweise handelt es sich dabei um Rhodium-Komplexverbindungen, die der allgemeinen Formel $HRh(CO)_xL_{4-x}$ entsprechen, wobei x die Zahlen 1 bis 3 sind. L steht für wasserlösliche Liganden, insbesondere Phosphine der allgemeinen Formel

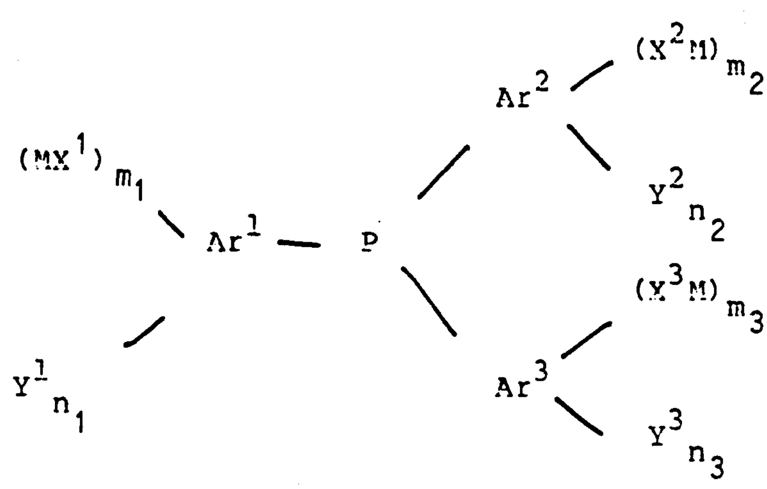

Hierin steht $Ar^1$, $Ar^2$ und $Ar^3$ jeweils für eine Phenyl-oder Naphthylgruppe, $Y^1$, $Y^2$, $Y^3$ jeweils für eine geradkettige oder verzweigte Alkylgruppe mit 1 bis 4 C-Atomen, eine Alkoxygruppe, ein Halogenatom, eine OH-, CN-, $NO_2$- oder $R^1R^2N$-Gruppe, in der $R^1$ und $R^2$ jeweils eine geradkettige oder verzweigte Alkylgruppe mit 1 bis 4 C-Atomen ist; $X^1$, $X^2$, $X^3$ bedeutet jeweils einen Carboxylat-($COO^-$) und/oder Sulfonat-($SO_3$-)-Rest, $n_1$, $n_2$, $n_3$ sind gleiche oder verschiedene ganze Zahlen von 0 bis 5, M stellt ein Alkalimetallion, das Äquivalent eines Erdalkalimetall- oder Zinkions oder ein Ammonium- oder quartäres Alkylammoniumion der allgemeinen Formel $N(R^3R^4R^5R^6)^+$ dar, in der $R^3$, $R^4$, $R^5$, $R^6$ jeweils eine geradkettige oder verzweigte Alkylgruppe mit 1 bis 20 C-Atomen ist, und vorzugsweise $R^3$ eine geradkettige oder verzweigte Alkylgruppe mit 7 bis 18 Kohlenstoffatomen und $R^4$, $R^5$, $R^6$ geradkettige oder verzweigte Alkylgruppen mit 1 bis 4 Kohlenstoffatomen sind; $m_1$, $m_2$, $m_3$ sind gleiche oder verschiedene ganze Zahlen von 0 bis 3, wobei mindestens eine Zahl $m_1$, $m_2$ oder $m_3$ gleich oder größer als 1 ist.

Außer der Rhodium-Komplexverbindung kann die wäßrige Lösung noch freie, überschüssige Liganden, sowie deren Umwandlungs- und Abbauprodukte enthalten. Schließlich können auch noch organische Bestandteile, nämlich Ausgangsstoffe und Produkte der Reaktion, die durch die Rhodiumkomplexverbindung katalysiert wurde, entsprechend ihrer Löslichkeit in Wasser sowie weitere Stoffe, die zur Durchführung der Reaktion eingesetzt wurden, wie amphiphile Reagenzien, gelöst sein.

Erfindungsgemäß wird die Lösung der Komplexverbindung zunächst in Gegenwart eines wasserlöslichen Salzes einer Carbonsäure bei 80 bis 140°C mit Sauerstoff oder einem sauerstoffhaltigen Gas, z.B. Luft, behandelt. Die Umsetzung erfolgt bei Drücken von 0,1 bis 2,0 MPa, vorzugsweise 0,2 bis 1,0 und insbesondere 0,3 bis 0,7 MPa.

Die Gesamtkonzentration der salzartigen Verbindungen in der nach dem neuen Verfahren aufzubereitenden Lösung soll 15 Gew.-% nicht übersteigen. Es ist zweckmäßig, Konzentrationen von 3 bis 12, vorzugsweise 5 bis 10 Gew.-% Salz, bezogen auf die Lösung, einzuhalten. Gegebenenfalls ist die Salzkonzentration der Lösung durch Zugabe von Wasser auf die vorstehend genannten Werte einzustellen.

Je g-Atom Rhodium setzt man der wäßrigen Lösung 20 bis 500, insbesondere 40 bis 300 und bevorzugt 50 bis 200 Mol Carbonsäuresalz zu.

Die Carbonsäuresalze leiten sich von Carbonsäuren mit 7 bis 22 Kohlenstoffatomen ab. Vorzugsweise verwendet man Salze aliphatischer, cycloaliphatischer, aromatischer und/oder araliphatischer Carbonsäuren mit 8 bis 13 Kohlenstoffatomen. Unter ihnen sind besonders die Monocarbonsäuren geeignet. Bewährt haben sich hier vor allem Salze verzweigter aliphatischer Monocarbonsäuren, insbesondere Salze der 2-Ethylhexansäure, der Isononansäure und der Isotridecansäure. Unter der Bezeichnung Isononansäure und Isotridecansäure versteht man die durch Hydroformylierung und anschließende Oxidation erhaltenen Reaktionsprodukte des Diisobutylens bzw. des Tetrapropylens.

Den Sauerstoff oder das sauerstoffhaltige Gas leitet man zweckmäßig über Verteilervorrichtungen und gegebenenfalls unter Rühren durch die erhitzte Lösung. Es hat sich bewährt, in der Lösung einen pH-Wert von 4 bis 8, vorzugsweise 5 bis 7,5 und insbesondere 5,5 bis 7 aufrechtzuerhalten. Die Dauer der Behandlung hängt insbesondere von der gewählten Temperatur und dem Sauerstoffangebot ab. Reaktionszeiten von 1 bis 3 Stunden reichen im allgemeinen aus.

Nach Beendigung der Oxidation mit Sauerstoff oder dem sauerstoffhaltigen Gas wird in einer zweiten Reaktionsstufe durch Zugabe von Hypochlorit die Rhodiumabtrennung vervollständigt.

Dabei ist es nicht erforderlich, die zuvor abgeschiedenen, in Wasser unlöslichen Rhodiumverbindungen

aus der Lösung zu entfernen. Vielmehr kann man der Lösung das Hypochlorit im selben Reaktor unmittelbar nach Beendigung der Sauerstoffzufuhr und nach Einstellung der erforderlichen Reaktionstemperatur zusetzen.

Als Hypochlorite werden die in Wasser löslichen Verbindungen bevorzugt. Insbesondere die in technischem Maßstab verfügbaren Calcium-, Natrium- und Kaliumsalze finden Anwendung.

Obgleich es möglich ist, das Hypochlorit der Komplexsalzlösung in Substanz zuzugeben, wendet man es zweckmäßig in Wasser gelöst an. Die Konzentration dieser wäßrigen Lösung ist nicht kritisch und kann in weiten Bereichen variiert werden. Es ist lediglich darauf zu achten, daß die Reaktionslösung nicht übermäßig verdünnt wird.

Die Umsetzung mit Hypochlorit erfolgt bei 50 bis 140, insbesondere 70 bis 120 °C, vorteilhaft unter Rühren. Die Reaktionszeit ist wiederum abhängig von der Temperatur, jedoch kürzer als in der ersten Reaktionsstufe. Sie beträgt etwa 0,25 bis 1,5 Stunden.

Um eine optimale Wirkung der Hypochlorite zu erzielen, hält man in der Reaktionslösung vorzugsweise pH-Werte zwischen 3 und 6 und insbesondere zwischen 4 und 5 aufrecht.

Die in den beiden Reaktionsstufen eingesetzten Oxidationsmittel Sauerstoff bzw. Hypochlorit werden, bezogen auf Rhodium, in großem Überschuß eingesetzt. Je g-Atom Rhodium wendet man 2 bis 20 $m^3$ Sauerstoff/h und 150 bis 350 Mol Hypochlorit an. In diesem Zusammenhang ist zu berücksichtigen, daß die in der Lösung vorhandene Rhodiummenge klein und daher der Chemikalienaufwand insgesamt gering ist.

Die durch Oxidation gebildeten Rhodiumverbindungen sind in Wasser unlöslich und scheiden sich als ölige Schicht auf der wäßrigen Lösung ab. Die Trennung der beiden Phasen erfolgt in einfacher Weise auf Grund ihrer unterschiedlichen Dichte. Zweckmäßiger ist es jedoch, die Rhodiumverbindungen in einem wasserunlöslichen, organischen Lösungsmittel aufzunehmen. Dieses Lösungsmittel wird dem Reaktionsgemisch zu Beginn oder während der Umsetzung zugegeben. Vorzugsweise setzt man es jedoch erst nach Beendigung der Reaktion zu. Geeignete organische Lösungsmittel sind aliphatische Kohlenwasserstoffe wie Cyclohexan, aromatische Kohlenwasserstoffe wie Benzol, Toluol oder Xylol, aliphatische Carbonsäuren mit 5 bis 10 Kohlenstoffatomen oder deren Ester, aliphatische oder cycloaliphatische Ketone mit 5 bis 10 Kohlenstoffatomen. Bevorzugt wird Toluol verwendet.

Die Extraktion der Rhodiumverbindung mit dem organischen Lösungsmittel erfolgt bei Temperaturen zwischen 10 bis 100 °C, vorzugsweise 40 bis 60 °C. Sie kann, falls erforderlich, mehrfach wiederholt werden.

Die Lösung der Rhodiumverbindung in dem organischen Lösungsmittel kann unmittelbar als Katalysatorkomponente wieder eingesetzt werden. Selbstverständlich ist es aber auch möglich, sie zunächst durch Behandeln mit Kohlenmonoxid und Wasserstoff in eine Rhodiumcarbonylverbindung überzuführen oder sie mit der wäßrigen Lösung des Phosphorliganden in eine wasserlösliche Rhodiumkomplexverbindung umzusetzen.

Das neue Verfahren erlaubt es, bis zu 95 % des ursprünglich vorhandenen Rhodiums in wirtschaftlich vertretbaren Reaktionszeiten aus der wäßrigen Lösung abzutrennen.

In den nachfolgenden Beispielen wird die Erfindung näher beschrieben. Es ist aber nicht beabsichtigt, sie auf diese speziellen Ausführungsformen zu beschränken.

In den Beispielen 1 bis 3 ist die Behandlung einer Rhodiumkomplexverbindungen enthaltenden wäßrigen Lösung mit Sauerstoff (in Form von Luft) allein und im Beispiel 4 mit Natriumhypochlorit allein beschrieben. Die Beispiele 5 bis 13 betreffen die zweistufige Oxidation nach dem erfindungsgemäßen Verfahren.

Beispiele 1 bis 3

Jeweils 1000 g einer wäßrigen Lösung, die 93 Gew.-ppm Rhodium in Form einer Komplexverbindung mit Tri-Na-tri-phenylphosphin-trisulfonat als Komplexligand und insgesamt 8,75 Gew.-% Salze enthält, werden die in Tabelle 1 angegebenen Mengen 2-Ethylhexansäure und Na-2-Ethylhexanoat zugesetzt. Darauf leitet man über einen Zeitraum von 3 bis 6 Stunden und bei einem Druck von etwa 0,2 MPa Luft durch die auf 100 bis 120 °C erhitzte Lösung. Es bildet sich eine in Wasser unlösliche Rhodiumverbindung, die durch zweifache Extraktion mit Toluol abgetrennt wird. In der verbleibenden Wasserphase wird der Rhodium-Restgehalt bestimmt. Reaktionsbedingungen und Ergebnisse der Untersuchungen sind in Tabelle 1 zusammengestellt.

Beipiel 4

Es werden 1000 g der in den Beispielen 1 bis 3 eingesetzten Lösung verwendet. Nach Einstellung des

pH-Wertes in der Lösung durch Zugabe von Salzsäure erhitzt man auf Reaktionstemperatur und fügt unter Rühren Natriumhypochlorit als wäßrige Lösung mit einem Gehalt von 13 Gew.-% Hypochlorit (bezogen auf die Lösung) zu. Man läßt nachreagieren, abkühlen und extrahiert, wie in den Beispielen 1 bis 3 mit Toluol. Reaktionsbedingungen und das Ergebniss des Versuches sind in Tabelle 2 zusammengestellt.

Beispiele 5 bis 13

Es werden jeweils 1000 g der in den Beispielen 1 bis 4 eingesetzten Lösung verwendet. Die Proben werden zunächst unter übereinstimmenden Bedingungen mit Luft behandelt. Anschließend setzt man die Lösung ohne vorherige Abtrennung der abgeschiedenen Rhodiumverbindung, mit Natriumhypochlorit um. Reaktionsbedingungen und Ergebnisse der Untersuchungen sind in Tabellen 3a und 3b zusammengestellt.

Tabelle 1

| Beispiel | Na-2-Ethylhexanoat (mol/g-At Rh) | 2-Ethylhexansäure (mol/g-At Rh) | pH-Wert | Temperatur (°C) | Druck (MPa) | Luft ($m^3$/h . g-At Rh) | Zeit (min) | Rh in wäßr. Lösung (Gew.-ppm) |
|---|---|---|---|---|---|---|---|---|
| 1 | 150 | 20 | 6,19 | 100 | 0,2 | 14 | 180 | 12,9 |
| 2 | 150 | 20 | 6,50 | 120 | 0,2 | 14 | 350 | 5,0 |
| 3 | 150 | 20 | 6,50 | 100 | 0,2 | 14 | 350 | 5,7 |

**Tabelle 2**

| Beispiel | pH-Wert | Temperatur (°C) | NaOCl (mol/g-At Rh) | Zeit* (min) | Rh in wäßr.Lösung (Gew.-ppm) |
|---|---|---|---|---|---|
| 4 | 5,0 | 100 | 645 | 10+15 | 13 |

* Reaktions- und Nachreaktionszeit

Tabelle 3a - Behandlung mit Luft

| Beispiel | Na-2-Ethylhexanoat (mol/g-At Rh) | 2-Ethylhexansäure (mol/g-At Rh) | pH-Wert | Temperatur (°C) | Druck (MPa) | Luft (m3/h. g-At Rh) | Zeit (min) |
|---|---|---|---|---|---|---|---|
| 5-13 | 150 | 20 | 6,5 | 100 | 0,2 | 14 | 50 |

Tabelle 3b - Behandlung mit NaOCl

| Beispiel | pH-Wert | Temperatur (°C) | NaOCl (mol/g-At Rh) | Zeit (min) | Rh in wäßr. Lösung (Gew.-ppm) |
|---|---|---|---|---|---|
| 5 | 4,5 | 100 | 215 | 10+15 | 4,9 |
| 6 | 5,0 | 100 | 215 | 10+15 | 4,6 |
| 7 | 6,6 | 100 | 215 | 10+15 | 6,5 |
| 8 | 3,9 | 100 | 215 | 10+15 | 7,2 |
| 9 | 1,0 | 100 | 215 | 10+15 | 10,5 |
| 10 | 4,5 | 50 | 215 | 10+15 | 9,5 |
| 11 | 5,0 | 20 | 215 | 10+15 | 8,8 |
| 12 | 4,5 | 20 | 215 | 1440 | 8,1 |
| 13 | 4,5 | 100 | 22 | 10+15 | 8,5 |

## Patentansprüche

1. Verfahren zur Rückgewinnung von Rhodium aus Rhodiumkomplexverbindungen enthaltenden wäßrigen Lösungen, dadurch gekennzeichnet, daß diese Lösungen in einer ersten Stufe bei 80 bis 140 °C mit Sauerstoff oder einem sauerstoffhaltigen Gas in Gegenwart eines wasserlöslichen Salzes einer Carbonsäure mit 7 bis 22 Kohlenstoffatomen und in einer zweiten Stufe bei 50 bis 140 °C mit Hypochlorit behandelt werden.

2. Verfahren nach Anspruch 1, dadurch gekennzeichnet, daß in der mit Sauerstoff zu behandelnden Lösung ein pH-Wert von 4 bis 8, vorzugsweise 5 bis 7,5 und insbesondere 5,5 bis 7 aufrechterhalten wird.

3. Verfahren nach Anspruch 1 oder 2, dadurch gekennzeichnet, daß die Behandlung mit Sauerstoff oder einem sauerstoffhaltigen Gas bei Drücken von 0,1 bis 2,0 MPa, vorzugsweise 0,2 bis 1,0 und insbesondere 0,3 bis 0,7 MPa erfolgt.

4. Verfahren nach einem oder mehreren der Ansprüche 1 bis 3, dadurch gekennzeichnet, daß die Behandlung mit Hypochlorit bei 70 bis 120 ° C erfolgt.

5. Verfahren nach einem oder mehreren der Ansprüche 1 bis 4, dadurch gekennzeichnet, daß in der mit Hypochlorit zu behandelnden Lösung ein pH-Wert zwischen 3 und 6, insbesondere 4 und 5, aufrechterhalten wird.

6. Verfahren nach einem oder mehreren der Ansprüche 1 bis 5, dadurch gekennzeichnet, daß je g-Atom Rhodium 2 bis 20 $m^3$ Sauerstoff/h und 150 bis 350 Mol Hypochlorit angewendet werden.

7. Verfahren nach einem oder mehreren der Ansprüche 1 bis 6, dadurch gekennzeichnet, daß die abgeschiedene, in Wasser unlösliche Rhodiumverbindung mit Toluol extrahiert wird.

## Claims

1. A process for the recovery of rhodium free from aqueous solutions containing rhodium complex compounds, characterised in that these solutions are treated in a first stage at 80 to 140 ° C with oxygen or an oxygen-containing gas in the presence of a water-soluble salt of a carboxylic acid having 7 to 22 carbon atoms, and in a second stage at 50 to 140 ° C with hypochlorite.

2. A process according to claim 1, characterised in that a pH value of 1 to 8, preferably 5 to 7.5 and in particular 5.5 to 7 is maintained in the solution to be treated with oxygen.

3. A process according to claim 1 or 2, characterised in that the treatment with oxygen or an oxygen-containing gas takes place at pressures of 0.1 to 2.0 MPa, preferably 0.2 to 1.0 and in particular 0.3 to 0.7 MPa.

4. A process according to one or more of the claims 1 to 3, characterised in that the treatment with hypochlorite takes place at 70 to 120 ° C.

5. A process according to one or more of the claims 1 to 4, characterised in that a pH value of between 3 and 6, in particular 4 and 5 is maintained in the solution to be treated with hypochlorite.

6. A process according to one or more of the claims 1 to 5, characterised in that 2 to 20 $m^3$ of oxygen per hour and 150 to 350 moles of hypochlorite are used per gramme-atom of rhodium.

7. A process according to one or more of the claims 1 to 6, characterised in that the precipitated water-insoluble rhodium compound is extracted with toluene.

## Revendications

1. Procédé pour la récupération de rhodium de solution aqueuse contenant des composés complexes de rhodium, caractérisé en ce que ces solutions sont traitées dans une première étape à 80-140 ° C par l'oxygène ou un gaz contenant de l'oxygène en présence d'un sel soluble dans l'eau de l'acide carboxylique en $C_7$-$C_{22}$ et dans une seconde étape à 50-140 ° C par un hypochlorite.

2. Procédé selon la revendication 1, caractérisé en ce que l'on maintient dans la solution à traiter par l'oxygène un pH de 1 à 3, de préférence de 5 à 7,5 et en particulier de 5,5 à 7.

3. Procédé selon la revendication 1 ou 2, caractérisé en ce que le traitement par l'oxygène ou par un gaz

contenant de l'oxygène s'effectue sous des pressions de 0,1 à 2,0 MPa, de préférence de 0,2 à 1,0 et en particulier de 0,3 à 0,7 MPa.

4. Procédé selon une ou plusieurs des revendications 1 à 3, caractérisé en ce que le traitement par l'hypochlorite est effectué à 70-120 ° C.

5. Procédé selon une ou plusieurs des revendications 1 à 4, caractérisé en ce que l'on maintient dans la solution à traiter par l'hypochlorite un pH compris entre 3 et 6, en particulier entre 4 et 5.

6. Procédé selon une ou plusieurs des revendications 1 à 5, caractérisé en ce que l'on utilise 2 à 20 $m^3$ d'oxygène par heure et 150 à 350 mol d'hypochlorite par atome-gramme de rhodium.

7. Procédé selon une ou plusieurs des revendications 1 à 6, caractérisé en ce que le composé de rhodium insoluble dans l'eau précipité est extrait par le toluène.